# EUROPEAN PATENT APPLICATION

(11) **EP 4 338 867 A1**
(43) Date of publication of application: **20.03.2024**
(21) Application number: 23190812.0
(22) Date of filing: 10.08.2023
(51) Int. Cl.: B22F 10/28, B22F 10/31, B22F 10/36, B22F 10/85, B22F 12/41, B22F 12/90, B23K 15/00, B33Y 10/00, B33Y 30/00, B33Y 50/02, G01N 23/2208, G01N 23/225

(54) **DEVICES, SYSTEMS, AND METHODS FOR MONITORING A SPOT QUALITY OF AN ELECTRON BEAM**

(30) Priority: 29.08.2022 US 202217897294
(71) Applicant: Arcam AB, 435 33 Mölnlycke (SE)
(72) Inventor: JONNOR, Jimmie, SE-435 33 Molnlycke (SE); HELLGREN, Jonas, SE-435 33 Molnlycke (SE)
(74) Representative: Hafner & Kohl PartmbB

(57) **Abstract**

A method of monitoring a spot quality of an electron beam (131) includes directing the electron beam (131) to a first measurement point (502) in a powder layer (112) a plurality of times, adjusting a focus offset of the electron beam (131) each of the plurality of times the electron beam (131) is directed to the first measurement point (502), measuring x-ray emissions from the first measurement point (502) each of the plurality of times the electron beam (131) is directed to the first measurement point (502), and determining a drift in a focus or an intensity of the electron beam (131) based on the measured x-ray emissions.

## Description

### FIELD

The present disclosure relates to devices, systems, and methods for monitoring a spot quality of an electron beam.

### BACKGROUND

In additive manufacturing processes, particularly those that utilize electron-beam melting of a powder layer to create an article and move a laser beam spot along a bed of metal powder creating a melt pool of the powder that solidifies to form the part from the powder according to the build path traced by the laser.

### BRIEF DESCRIPTION OF THE DRAWINGS

FIG. 1 schematically depicts a cutaway side view of an illustrative additive manufacturing system according to one or more embodiments shown and described herein;
FIG. 2A depicts a block diagram of illustrative internal components of a control component of the additive manufacturing system of FIG. 1 according to one or more embodiments shown and described herein;
FIG. 2B depicts a block diagram of illustrative logic modules contained within a memory component of the control component of FIG. 2A according to one or more embodiments shown and described herein;
FIG. 3 depicts an illustrative control network according to one or more embodiments shown and described herein;
FIG. 4 depicts a flow diagram of an illustrative method of collecting x-ray emission data from a powder layer, according to one or more embodiments shown and described herein;
FIG. 5 depicts an illustrative powder layer from which x-ray emissions are collected, according to one or more embodiments shown and described herein;
FIG. 6 depicts a flow diagram of an illustrative method of determining a drift in a focus of an electron beam based on the x-ray emission data collected from the method of FIG. 4, according to one or more embodiments shown and described herein;
FIG. 7 depicts an illustrative plot of raw x-ray emissions collected from a measurement point of a powder layer, according to one or more embodiments shown and described herein;
FIG. 8 depicts an illustrative plot of mean x-ray emissions generated from the plot of FIG. 7, according to one or more embodiments shown and described herein; and
FIG. 9 depicts an illustrative smoothed plot of mean x-ray emissions generated from the plot of FIG. 8, according to one or more embodiments shown and described herein.

### DETAILED DESCRIPTION

It is desirable to ensure the electron beam is properly functioning throughout a build process to ensure a high control of material properties of the fused articles. Throughout the manufacturing processes, one or more components of an energy beam source may begin to deteriorate in functionality. It, therefore, becomes useful to monitor the health or performance of the energy beam source to correct for any deteriorations in the energy beam functionality. Accordingly a need exists for methods of monitoring the performance of energy beam sources to correct for any deficiencies or deteriorations in the energy beam source.

The present disclosure generally relates to devices, systems, and methods that monitor the quality, such as health or performance, of an energy beam source. For instance, prior to a particular build, an energy beam source configured to generate an electron beam is calibrated. The quality of the energy beam source may deteriorate over time, however, resulting in the generation of electron beams of undesirable properties. Generally, procedures for measuring the quality of the energy beam source are time consuming, such that quality of the energy beam source is typically only measured during "down time." For instance, a procedure for measuring the quality of an energy beam source may only be conducted after completion of a first build process, and before beginning a second build process. However, in doing so, a deterioration in the performance of the energy beam source during a build process cannot be identified and corrected for. Therefore, the component built during the first build process may not meet standards in quality due to the undesirable energy beam properties throughout the build. Embodiments described herein address one or more of the above-noted shortcomings. Particularly, embodiments herein provide devices, systems, and methods for monitoring the performance of an energy beam source, and more particularly the quality of an electron beam generated by the energy beam source, during a build cycle. The spot quality of the electron beam is particularly monitored by directing the electron beam to a first measurement point in a powder layer a plurality of times and adjusting a focus offset of the electron beam each of the plurality of times the electron beam is directed to the first measurement point. X-ray emissions from the first measurement point may be measured each of the plurality of times the electron beam is directed to the first measurement point. Based on the x-ray emissions, it may be determined whether there is a drift in a focus or an intensity of the electron beam, and the electron beam may be adjusted based on the determination.

Electron-beam additive manufacturing, which may also be known as electron-beam melting (EBM), is a type of additive manufacturing (3D printing) process that is typically used for metallic articles. EBM utilizes a raw material in the form of a metal powder or a metal wire, which is placed under a vacuum (e.g., within a vacuum sealed build chamber). Generally speaking, the raw material is melted or fused together from heating via an electron beam.

Systems that utilize EBM generally obtain data from a 3D computer-aided design (CAD) model and use the data to place successive layers of the raw material using an apparatus to spread the raw material, such as a powder distributor. The successive layers are melted together utilizing a computer-controlled electron beam. As noted above, the process takes place under vacuum within a vacuum sealed build chamber, which makes the process suited to manufacture parts using reactive materials having a high affinity for oxygen (e.g., titanium). In embodiments, the process operates at higher temperatures (up to about 1000 °C) relative to other additive manufacturing processes, which can lead to differences in phase formation though solidification and solid-state phase transformation.

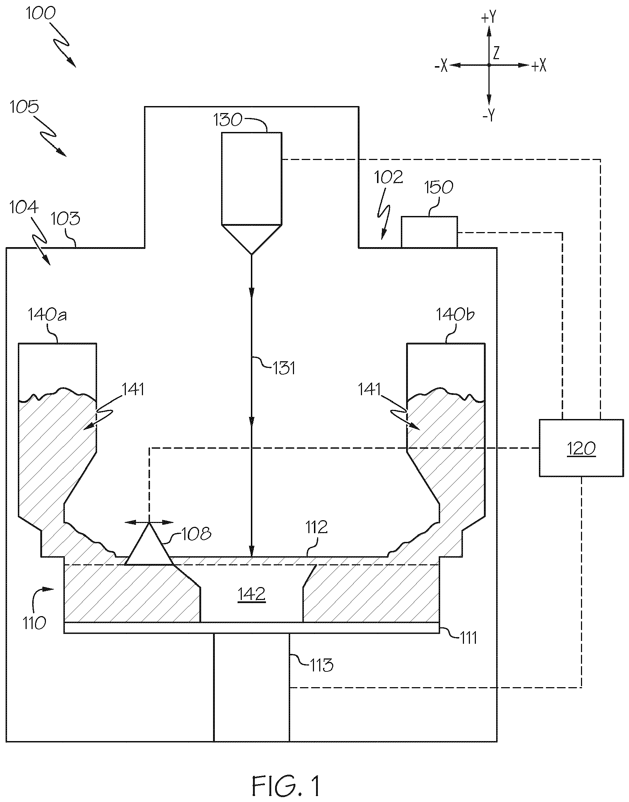

FIG. 1 depicts a first embodiment of the present disclosure. As shown in FIG. 1, an additive manufacturing system 100 includes at least a build chamber 102 and a control component, or electronic control unit, 120. The build chamber 102 defines an interior 104 that is separated from an exterior environment 105 via one or more chamber walls 103.

In some embodiments, the interior 104 of the build chamber 102 may be a vacuum sealed interior such that an article 142 formed within the build chamber 102 is formed under optimal conditions for EBM, as is generally understood. The build chamber 102 is capable of maintaining a vacuum environment via a vacuum system. Illustrative vacuum systems may include, but are not limited to, a turbo molecular pump, a scroll pump, an ion pump, and one or more valves, as are generally understood. In some embodiments, the vacuum system may be communicatively coupled to the control component 120 such that the control component 120 directs operation of the vacuum system to maintain the vacuum within the interior 104 of the build chamber 102. In some embodiments, the vacuum system may maintain a base pressure of about 1×10⁻⁵ mbar or less throughout an entire build cycle. In further embodiments, the vacuum system may provide a partial pressure of He to about 2×10⁻³ mbar during a melting process.

In other embodiments, the build chamber 102 may be provided in an enclosable chamber provided with ambient air and atmosphere pressure.

The build chamber 102 generally includes within the interior 104 a powder bed 110 supporting a powder layer 112 thereon, as well as a powder distributor 108. In some embodiments, the build chamber 102 may further include one or more raw material hoppers 140a, 140b that maintain raw material 141 therein. In some embodiments, the build chamber 102 may further include an emitter, or energy beam source, 130. The build chamber 102 may further include other components, particularly components that facilitate EBM, including components not specifically described herein.

The powder bed 110 is generally a platform or receptacle located within the interior 104 of the build chamber 102 that is arranged to receive the raw material 141 from the one or more raw material hoppers 140a, 140b. The powder bed 110 is not limited in size or configuration by the present disclosure, but may generally be shaped and sized to hold an amount of the raw material 141 from the raw material hoppers 140a, 140b in the form of the powder layer 112, one or more portions of article 142, and/or unfused raw material 141, as described in greater detail herein.

In some embodiments, the powder bed 110 may include a movable build platform 111 supported by a lifting component 113. The movable build platform 111 may generally be a surface within the powder bed 110 that is movable by the lifting component 113 in a system vertical direction (e.g., in the +y/-y directions of the coordinate axes of FIG. 1) to increase and/or decrease a total volume of the powder bed 110. For example, the movable build platform 111 within the powder bed 110 may be movable by the lifting component 113 in a downward direction (e.g., toward the -y direction of the coordinate axes of FIG. 1) so as to increase the volume of the powder bed 110. In addition, the movable build platform 111 may be movable by the lifting component 113 to add each successive powder layer 112 to the article 142 being formed, as described in greater detail herein.

The lifting component 113 is not limited by the present disclosure, and may generally be any device or system capable of being coupled to the movable build platform 111 and movable to raise or lower the movable build platform 111 in the system vertical direction (e.g., in the +y/y directions of the coordinate axes of FIG. 1). In some embodiments, the lifting component 113 may utilize a linear actuator type mechanism to effect movement of the movable build platform 111. Illustrative examples of devices or systems suitable for use as the lifting component 113 include, but are not limited to, a scissor lift, a mechanical linear actuator such as a screw based actuator, a wheel and axle actuator (e.g., a rack and pinion type actuator), a hydraulic actuator, a pneumatic actuator, a piezoelectric actuator, an electromechanical actuator, and/or the like. In some embodiments, the lifting component 113 may be located within the build chamber 102. In other embodiments, the lifting component 113 may be only partially located within the build chamber 102, particularly in embodiments where it may be desirable to isolate portions of the lifting component 113 that are sensitive to the harsh conditions (high heat, excessive dust, etc.) within the interior 104 of the build chamber 102. In some embodiments, the lifting component 113 may be communicatively coupled to the control component 120 such that the control component 120 directs operation of the lifting component 113.

The powder distributor 108 is generally arranged and configured to lay down and/or spread a layer of the raw material 141 as the powder layer 112 in the powder bed 110 (e.g., on start plate or build platform 111 within the powder bed). That is, the powder distributor 108 is arranged such that movement of the powder distributor 108 is in a horizontal plane defined by the x-axis and the z-axis of the coordinate axes depicted in FIG. 1. For example, the powder distributor 108 may be an arm, rod, or the like that extends a distance in the z direction of the coordinate axes of FIG. 1 over or above the powder bed 110 (e.g., from a first end to a second end of the powder bed 110). In some embodiments, the length of the powder distributor 108 may be longer than a width of the build platform 111 such that the powder layer 112 can be distributed on each position of the build platform 111. In some embodiments, the powder distributor 108 may have a central axis in parallel with a top surface of the build platform 111 (e.g., generally parallel to the +x/-x axis of the coordinate axes of FIG. 1). One or more motors, actuators, and/or the like may be coupled to the powder distributor 108 to effect movement of the powder distributor 108. For example, a rack and pinion actuator may be coupled to the powder distributor 108 to cause the powder distributor 108 to move back and forth over the powder bed in the +x/-x directions of the coordinate axes of FIG. 1, as indicated by the double sided arrow depicted above the powder distributor 108 in FIG. 1. In some embodiments, movement of the powder distributor 108 may be continuous (e.g., moving without stopping, other than to change direction). In other embodiments, movement of the powder distributor 108 may be stepwise (e.g., moving in a series of intervals). In yet other embodiments, movement of the powder distributor 108 may be such that a plurality of interruptions occur between periods of movement.

The powder distributor 108 may further include one or more teeth (e.g., rake fingers or the like) that extend from the powder distributor 108 into the raw material from the raw material hoppers 140a, 140b to cause disruption of the raw material when the powder distributor 108 moves (e.g., to distribute the raw material, to spread the powder layer 112, etc.). For example, the powder distributor 108 may include a plurality of rake teeth extending from a bottom surface of the powder distributor 108. In some embodiments, the rake teeth may extend in a direction that is substantially perpendicular to a plane of the build platform 111 (e.g., perpendicular to the plane formed by the x-axis and y-axis of the coordinate axes depicted in FIG. 1). In another embodiment, the rake teeth may be slanted with respect to the build platform 111. An angle of the slanted rake teeth with respect to a normal to the build platform may be any value, and in some embodiments is between about 0° and about 45°. In some embodiments, each one of the plurality of rake teeth may be a metal foil or a metal sheet. The total length of the plurality of rake teeth may be longer than a width of the build platform 111 in order to make it possible to distribute powder on each position of the build platform 111. The rake teeth may also be shaped and sized to rake through the raw material to distribute the powder layer 112 on the build platform 111.

It should be understood that while the powder distributor 108 described herein generally extends a distance in the x direction of the coordinate axes depicted in FIG. 1 and moves in the +x/-x directions of the coordinate axes depicted in FIG. 1 to spread the powder layer 112 as described above, this is merely one illustrative example. Other configurations are also contemplated. For example, the powder distributor 108 may rotate about an axis to spread the powder layer 112, may articulate about one or more joints or the like to spread the powder layer 112, and/or the like without departing from the scope of the present disclosure.

In some embodiments, a cross section of the powder distributor 108 may be generally triangular, as depicted in FIG. 1. However, it should be understood that the cross section may be any shape, including but not limited to, circular, elliptical, quadratic, rectangular, polygonal or the like. A height of the powder distributor 108 may be set in order to give the powder distributor 108 a particular mechanical strength in the system vertical direction (e.g., along the +y/-y axis of the coordinate axes of FIG. 1). That is, in some embodiments, the powder distributor 108 may have a particular controllable flex in the system vertical direction. The height of the powder distributor may also be selected taking into account that the powder distributor 108 pushes an amount of the raw material 141. If the height of the powder distributor 108 is too small, the powder distributor 108 can only push forward a smaller amount relative to a higher powder distributor 108. However, if the height of the powder distributor 108 is too high, the powder distributor 108 may complicate the powder catching from a scree of powder, (e.g., the higher the height of the powder distributor 108, the more force may be required in order to catch a predetermined amount of powder from the scree of powder by moving the powder distributor 108 into the scree of powder and letting a predetermined amount of powder fall over the top of the powder distributor 108 from a first side in the direction of travel into the scree of powder to a second side in the direction of the build platform 111).

In some embodiments, the powder distributor 108 may be communicatively coupled to the control component 120, as depicted by the dashed line in FIG. 1 between the powder distributor 108 and the control component 120. As used herein, the term "communicatively coupled" generally refers to any link in a manner that facilitates communications. As such, "communicatively coupled" includes both wireless and wired communications, including those wireless and wired communications now known or later developed. As the powder distributor 108 is communicatively coupled to the control component 120, the control component 120 may transmit one or more signals, data, and/or the like to cause the powder distributor 108 to move, change direction, change speed, and/or the like. For example, a "reverse direction" signal transmitted by the control component 120 to the powder distributor 108 may cause the powder distributor 108 to reverse the direction in which it is moving (e.g., reverse movement in the +x direction to movement in the -x direction).

Each of the raw material hoppers 140a, 140b may generally be containers that hold an amount of the raw material 141 therein and contain an opening to dispense the raw material 141 therefrom. While FIG. 1 depicts two raw material hoppers 140a, 140b, the present disclosure is not limited to such. That is, any number of raw material hoppers may be utilized without departing from the scope of the present disclosure. Further, while FIG. 1 depicts the raw material hoppers 140a, 140b as being located within the interior 104 of the build chamber 102, the present disclosure is not limited to such. That is, the raw material hoppers 140a, 140b may be located outside or partially outside the build chamber 102 in various other embodiments. However, it should be understood that if a raw material hopper is located outside or partially outside the build chamber 102, one or more outlets of the raw material hoppers that supply the raw material 141 may be selectively sealed when not distributing the raw material 141 in order to maintain the vacuum within the build chamber 102.

The shape and size of the raw material hoppers 140a, 140b are not limited by the present disclosure. That is, the raw material hoppers 140a, 140b may generally have any shape and or size without departing from the scope of the present disclosure. In some embodiments, each of the raw material hoppers 140a, 140b may be shaped and or sized to conform to the dimensions of the build chamber 102 such that the raw material hoppers 140a, 140b can fit inside the build chamber. In some embodiments, the raw material hoppers 140a, 140b may be shaped and sized such that a collective volume of the raw material hoppers 140a, 140b is sufficient to hold an amount of raw material 141 that is appropriate to fabricate the article 142, which includes a sufficient amount of material to form each successive powder layer 112 and additional material that makes up the unfused raw material 141.

The raw material hoppers 140a, 140b may generally have an outlet for ejecting the raw material 141 located within the raw material hoppers 140a, 140b such that the raw material 141 can be spread by the powder distributor 108, as described herein. In some embodiments, such as the embodiment depicted in FIG. 1, the raw material 141 may freely flow out of the raw material hoppers 140a, 140b under the force of gravity, thereby forming piles or scree of raw material 141 for the powder distributor 108 to spread. In other embodiments, the outlets of the raw material hoppers 140a, 140b may be selectively closed via a selective closing mechanism so as to only distribute a portion of the raw material 141 located within the respective raw material hoppers 140a, 140b at a particular time. The selective closing mechanisms may be communicatively coupled to the control component 120 such that data and/or signals transmitted to/from the control component 120 can be used to selectively open and close the outlets of the raw material hoppers 140a, 140b.

The raw material 141 contained within the raw material hoppers 140a, 140b and used to form the article 142 is not limited by the present disclosure, and may generally be any raw material used for EBM now known or later developed. Illustrative examples of raw material 141 include, but are not limited to, pure metals such as titanium, aluminum, tungsten, or the like; and metal alloys such as titanium alloys, aluminum alloys, stainless steel, cobalt-chrome alloys, cobalt-chrome-tungsten alloys, nickel alloys, and/or the like. Specific examples of raw material 141 include, but are not limited to, Ti6Al4V titanium alloy, Ti6Al4V ELI titanium alloy, Grade 2 titanium, and ASTM F75 cobalt-chrome (all available from Arcam AB, Mölndal, Sweden). Another specific example of raw material 141 is INCONEL^{®} alloy 718 available from Special Metals Corporation (Huntington WV).

In embodiments, the raw material 141 is pre-alloyed, as opposed to a mixture. This may allow classification of EBM with selective laser melting (SLM), where other technologies like selective laser sintering (SLS) and direct metal laser sintering (DMLS) require thermal treatment after fabrication. Compared to selective laser melting (SLM) and DMLS, EBM has a generally superior build rate because of its higher energy density and scanning method.

The emitter 130 is generally an energy beam source that emits an electron beam 131. The emitter 130 may be a device that emits the electron beam 131 (e.g., a charged particle beam), such as, for example, an electron gun, a linear accelerator, or the like. The emitter 130 generates an electron beam 131 that may be used for melting or fusing together the raw material 141 when spread as the powder layer 112 on the build platform 111. The electron beam 131 generated by the emitter 130 may also be used for preheating the raw material 141 when spread as the powder layer 112 on the build platform 111 to an optimal ambient temperature. The electron beam 131 generated by the emitter 130 may also be used for sintering the raw material 141 when spread as the powder layer 112 on the build platform 111. In some embodiments, the emitter 130 may include at least one focusing coil, at least one deflection coil and an electron beam power supply, which may be electrically connected to an emitter control unit. In one illustrative embodiment, the emitter 130 generates a focusable electron beam with an accelerating voltage of about 60 kilovolts (kV) and with a beam power in the range of about 0 kilowatts (kW) to about 10 kW. The pressure in the vacuum chamber may be in the range of about 1×10⁻³ mBar to about 1×10⁻⁶ mBar when building the article 142 by fusing each successive powder layer 112 with the electron beam 131. In some embodiments, the emitter 130 may be communicatively coupled to the control component 120, as indicated in FIG. 1 by the dashed line between the emitter 130 and the control component 120. The communicative coupling of the emitter 130 to the control component 120 may provide an ability for signals and/or data to be transmitted between the emitter 130 and the control component 120, such as control signals from the control component 120 that direct operation of the emitter 130. In some embodiments, the additive manufacturing system 100 may include more than one emitter 130 that may be capable of generating multiple electron beams 131 simultaneously.

A sensing device 150 may be located in an area within or adjacent to the build chamber 102 and positioned to obtain information regarding the powder layer 112 and the electron beam 131. In some embodiments, the sensing device 150 may be located in the exterior environment 105 outside the build chamber 102, yet positioned such that the field of view or sensed area of the sensing device 150 captures an area within the build chamber 102, such the powder layer 112. In the embodiments where the sensing device 150 is positioned outside the build chamber 102, the harsh environment within the interior 104 of the build chamber 102 does not affect operation of the sensing device 150. That is, the heat, dust, metallization, and/or the like that occurs within the interior 104 of the build chamber 102 will not affect operation of the sensing device 150. In embodiments, the sensing device 150 is fixed in position such that a field of view or sensed area thereof remains constant (e.g., does not change). Moreover, the sensing device 150 is arranged in the fixed position such that a field of view or sensed area of the sensing device 150 encompasses an entirety of the powder layer 112. That is, the sensing device 150 is capable of imaging or otherwise sensing the entire powder layer 112 within the build chamber 102. In embodiments, the sensing device 150 may track the electron beam 131 without having a field of view of the entire powder layer 112. In this embodiment the sensing device 150 may be operable to adjust a current field of view of the sensing device 150 based on a position of the electron beam 131.

In some embodiments, the sensing device 150 may be an x-ray sensor configured to collect or measure x-rays emitted from the powder layer 112 when the electron beam 131 interacts with the powder layer 112. In some embodiments, the sensing device 150 may include a signal processing unit or the like. For example, the sensing device 150 may include a diode type sensor that transforms the collected information into electrical signals. A signal processing unit may then be used to filter and amplify the electrical signals before transmission of the signals to a control or analyzing device, such as, for example, the control component 120.

In some embodiments, the sensing device 150 may further be a device particularly configured to provide signals and/or data corresponding to x-rays emitted from the powder layer 112 to the control component 120. As such, the sensing device 150 may be communicatively coupled to the control component 120, as indicated by the dashed lines depicted in FIG. 1 between the sensing device 150 and the control component 120.

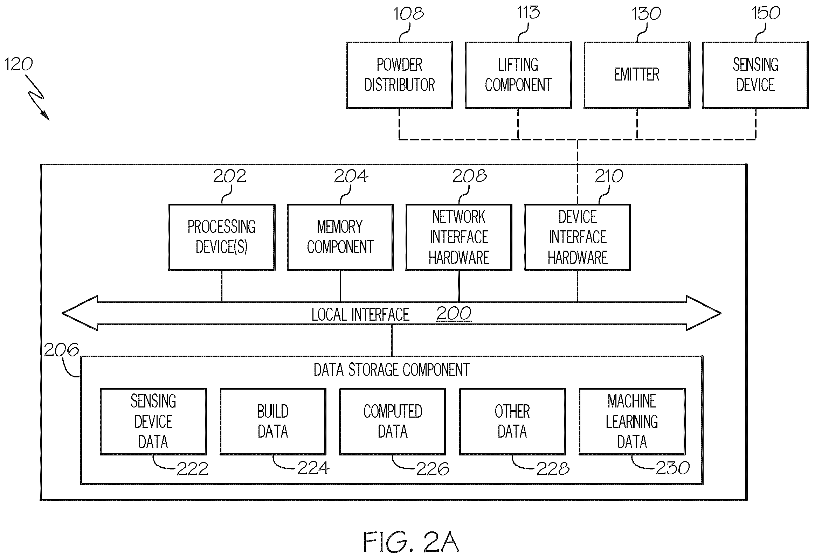

The control component 120 is generally a device that is communicatively coupled to one or more components of the additive manufacturing system 100 (e.g., the powder distributor 108, the lifting component 113, the emitter 130, and/or the sensing device 150) and is particularly arranged and configured to transmit and/or receive signals and/or data to/from the one or more components of the additive manufacturing system 100. Additional details regarding the control component 120 will be discussed herein with respect to FIGS. 2A-2B.

Referring now to FIGS. 1 and 2A, the various internal components of the control component 120 depicted in FIG. 1 are shown. Particularly, FIG. 2A depicts various system components for measuring x-ray emissions from the power layer 112 and determining if there is a drift in a focus or an intensity of the electron beam 131. FIG. 2A further depicts various system components for determining select areas of the powder layer 112 to direct the electron beam 131 to as measurement areas, and for controlling a focus offset of the electron beam 131.

As illustrated in FIG. 2A, the control component 120 may include one or more processing devices 202, a non-transitory memory component 204, network interface hardware 208, device interface hardware 210, and a data storage component 206. A local interface 200, such as a bus or the like, may interconnect the various components.

The one or more processing devices 202, such as a computer processing unit (CPU), may be the central processing unit of the control component 120, performing calculations and logic operations to execute a program. The one or more processing devices 202, alone or in conjunction with the other components, are illustrative processing devices, computing devices, processors, or combinations thereof. The one or more processing devices 202 may include any processing component configured to receive and execute instructions (such as from the data storage component 206 and/or the memory component 204).

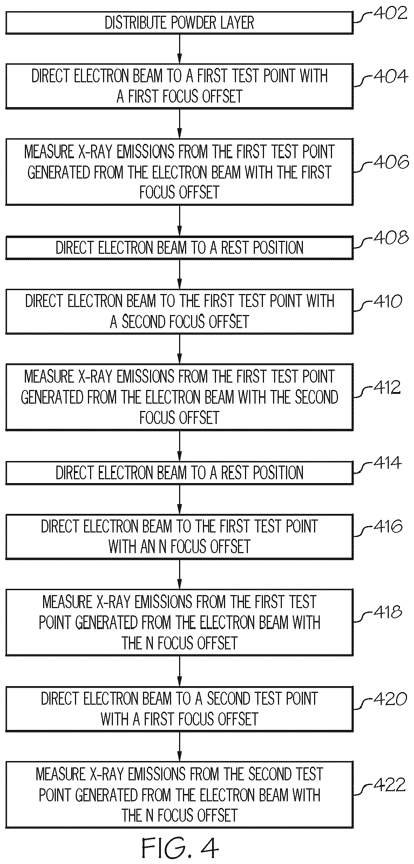

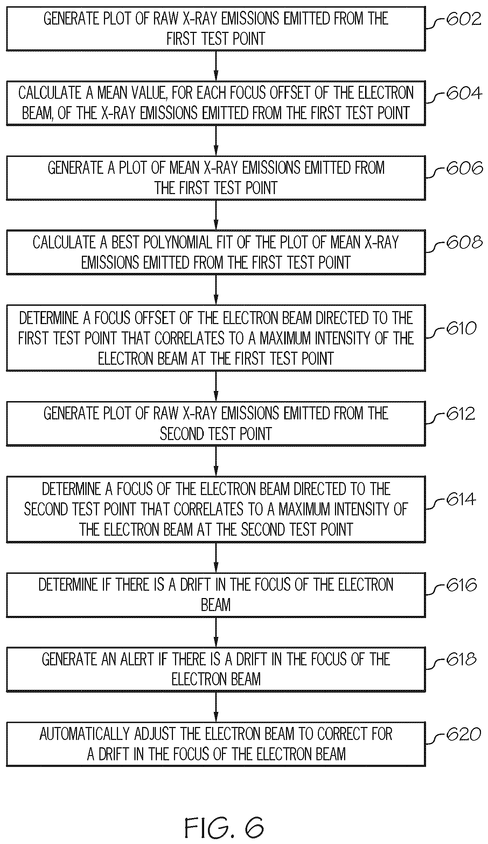

The memory component 204 may be configured as a volatile and/or a nonvolatile computer-readable medium and, as such, may include random access memory (including SRAM, DRAM, and/or other types of random access memory), read only memory (ROM), flash memory, registers, compact discs (CD), digital versatile discs (DVD), and/or other types of storage components. The memory component 204 may include one or more programming instructions thereon that, when executed by the one or more processing devices 202, cause the one or more processing devices 202 to complete various processes, such as the processes described herein with respect to FIGS. 4 and 6.

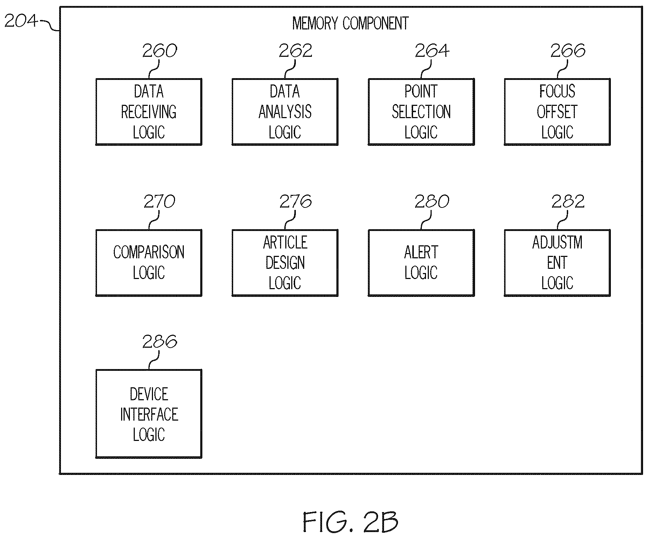

Still referring to FIG. 2A, the programming instructions stored on the memory component 204 may be embodied as a plurality of software logic modules, where each logic module provides programming instructions for completing one or more tasks. FIG. 2B depicts the various modules of the memory component 204 of FIG. 2A according to various embodiments.

As shown in FIG. 2B, the memory component includes a plurality of logic modules. Each of the logic modules shown in FIG. 2B may be embodied as a computer program, firmware, or hardware, as an example. Illustrative examples of logic modules present in the memory component 204 include, but are not limited to, data receiving logic 260, data analysis logic 262, point selection logic 264, focus offset logic 266, comparison logic 270, article design logic 276, alert logic 280, adjustment logic 282, and device interface logic 286.

Referring to FIGS. 1, 2A, and 2B, the data receiving logic 260 includes one or more programming instructions for receiving data from the sensing device 150. That is, the data receiving logic 260 may cause a connection between the device interface hardware 210 and the sensing device 150 such that data transmitted by the sensing device 150 is received by the control component 120. Further, the data transmitted by the sensing device 150 may be stored (e.g., within the data storage component 206).

The data analysis logic 262 includes one or more programming instructions for analyzing data received from sensing device 150. That is, the data analysis logic 262 contains programming for analyzing the data collected by the sensing device 150 and determining x-ray emissions from the powder layer 112. The data analysis logic 262 includes one or more programming instructions for generating plots of raw x-ray emission data from the powder layer 112 and mean plots of x-ray emission data. It should be appreciated that, in embodiments, the data analysis logic 262 generates a mathematic model of a plot rather than a plot itself such that numerical sequences may be compared instead of comparing the plots themselves. The data analysis logic 262 further includes one or more programming instructions for generating polynomial fits of mean plots of x-ray emission data and for identifying localized points on the polynomial fits of mean plots of x-ray emissions data.

Still referring to FIGS. 1, 2A, and 2B, the point selection logic 264 includes one or more programming instructions for selecting one or more points on the powder layer 112 to direct the electron beam 131 to as measurement points for the purposes of determining if there is a drift in the focus of the electron beam 131, as described in greater detail herein. That is, the point selection logic 264 may contain programming for determining one or more points on the powder layer 112 to direct the electron beam 131 and analyze sensor data for. For instance, if specific locations on the powder layer 112 are of interest, the point selection logic 264 may enable analysis of the particular area. The point selection logic 264 may further include programming instructions for determining that the selected one or more points are located in a previously fused region of the powder bed 110 or will be a future fused region of the powder layer 112 based on the model of the article 142. In some embodiments, the one or more selected points may be assigned a location identifier such that the one or more points can later be determined in subsequent sensor data. For example, each one of the one or more points may be assigned coordinates relative to one or more fixed areas in the sensor data such that the points can be located at the same coordinates in subsequent collections of sensor data. The point selection logic 264 may further include one or more programming instructions for selecting rest points to direct the electron beam 131 between each of a plurality of times the electron beam 131 is directed to a measurement point.

Still referring to FIGS. 1, 2A, and 2B, the focus offset logic 266 includes one or more programming instructions for selecting the focus offset of the electron beam 131 to be applied to a measurement point. The focus offset logic 266 may further include one or more programming instructions, for determining which focus offset of the electron beam 131 directed to a measurement point correlates to a maximum intensity of the electron beam 131 at the measurement point.

The comparison logic 270 generally includes one or more programming instructions for comparing the focus offset of the electron beam 131 correlating to a maximum intensity of the electron beam 131 at a measurement point of interest with a reference electron beam data to determine if there is a drift in the focus of the electron beam 131. Specifically, the comparison logic 270 will compare the focus offset of the electron beam 131 at a measurement point of a first powder layer with a corresponding measurement point on a subsequent powder layer 112.

The article design logic 276 generally includes one or more programming instructions for determining areas of the powder layer 112 to melt or fuse to form a cross section of the article 142 based on a user-input design of article 142, such as a CAD model. The article design logic 276 includes programming to determine the specific areas of the powder layer 112 to melt to form a cross section of the article 142. The article design logic 276 also includes programming instructions to determine the areas of previous powder layers beneath the powder layer 112 that have been previously fused to form cross sections of the article 142. The article design logic 276 also includes programming instructions to determine areas of future powder layers to be laid down on top of the powder layer 112 that will be fused according to the cross section of the article 142.

Still referring to FIGS. 1, 2A, and 2B, the device interface logic 286 includes one or more programming instructions for establishing communicative connections with the various devices or components of the additive manufacturing system 100. For example, the device interface logic 286 may include programming instructions usable to establish connections with the powder distributor 108, the emitter 130, the sensing device 150 and/or the lifting component 113 in various embodiments.

The alert logic 280 includes one or more programming instructions for generating one or more user alerts if it is determined there is a drift in a focus or an intensity of the electron beam 131.

The adjustment logic 282 includes one or more programming instructions for automatically adjusting one or more components of the emitter 130 to correct for a drift in the focus of the electron beam 131.

Referring again to FIG. 2A, the network interface hardware 208 may include any wired or wireless networking hardware, such as a modem, LAN port, wireless fidelity (Wi-Fi) card, WiMax card, mobile communications hardware, and/or other hardware for communicating with other networks and/or devices. For example, the network interface hardware 208 may be used to facilitate communication between external storage devices, user computing devices, server computing devices, external control devices, and/or the like via a network, such as, for example, a local network, the Internet, and/or the like.

Referring to FIGS. 1 and 2A the device interface hardware 210 may communicate information between the local interface 200 and one or more components of the additive manufacturing system 100. For example, the device interface hardware 210 may act as an interface between the local interface 200 and the powder distributor 108, the lifting component 113, the emitter 130, and the sensing device 150. The device interface hardware 210 may transmit or receive signals and/or data to/from the sensing device 150. The device interface hardware 210 may transmit control signals to the powder distributor 108, the lifting component 113, the emitter 130, the sensing device 150, and/or the like to effect control of said components.

Still referring to FIGS. 1 and 2A, the data storage component 206, which may generally be a storage medium, may contain one or more data repositories for storing data that is received and/or generated. The data storage component 206 may be any physical storage medium, including, but not limited to, a hard disk drive (HDD), memory, removable storage, and/or the like. While the data storage component 206 is depicted as a local device, it should be understood that the data storage component 206 may be a remote storage device, such as, for example, a server computing device, cloud based storage device, or the like. Illustrative data that may be contained within the data storage component 206 includes, but is not limited to, sensing device data 222, build data 224, computed data 226, machine learning data 230, and other data 228. The sensing device data 222 may generally be data that is used by the control component 120 to select measurement points and rest areas of the powder layer 112 and to measure x-ray emissions from the powder layer 112. The build data 224 may generally be used by the control component 120 to determine the specific geometry of a cross section of the article 142 in the powder layer 112, the locations of previously fused cross sections of the article 142 in the powder bed 110, the locations of to-be-fused cross sections of the article 142 in future powder layers, and/or the like. The computed data 226 may generally be data used by the control component 120 to generate one or more plots related to the measured x-ray emissions from the powder layer and to analyze the plots to determine if there is a drift in the focus of the electron beam 131. The machine learning data 230 may generally be data that is generated as a result of one or more machine learning processes used to improve the generation and analysis of the one or more plots related to the measured x-ray emissions from the powder layer 112, for instance. The other data 228 may generally be any other data that is usable for the purposes of determining if there is a drift in the focus of the electron beam 131, generating plots of x-ray emissions, selecting measurement points and rest areas in the powder layer 112, and/or the like, as described herein.

It should be understood that the components illustrated in FIGS. 2A and 2B are merely illustrative and are not intended to limit the scope of this disclosure. More specifically, while the components in FIGS. 2A and 2B are illustrated as residing within the control component 120, this is a non-limiting example. In some embodiments, one or more of the components may reside external to the control component 120.

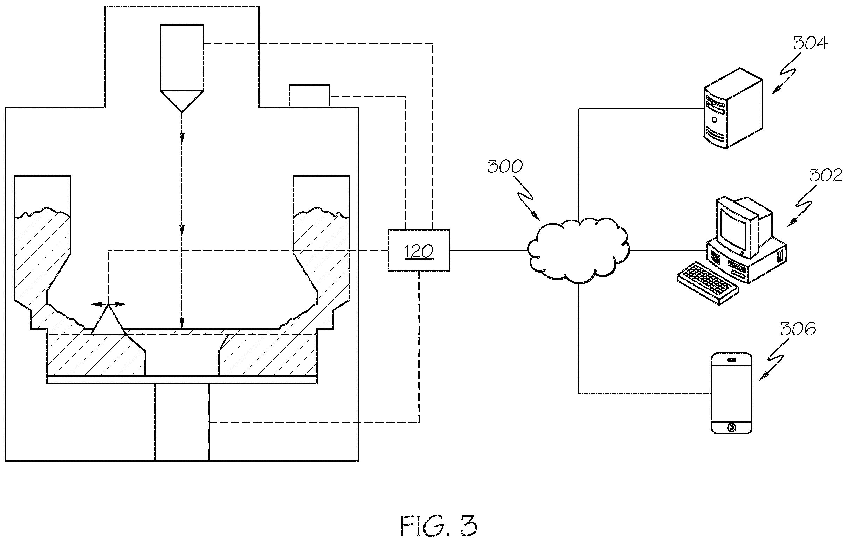

Referring now to FIG. 3, an illustrative control network 300 is depicted. As illustrated in FIG. 3, the control network 300 may include a wide area network (WAN), such as the Internet, a local area network (LAN), a mobile communications network, a public service telephone network (PSTN), a personal area network (PAN), a metropolitan area network (MAN), a virtual private network (VPN), and/or another network. The control network 300 may generally be configured to electronically connect one or more systems and/or devices, such as, for example, computing devices, servers, electronic devices, additive manufacturing systems, and/or components of any of the foregoing. Illustrative systems and/or devices may include, but are not limited to, a user computing device 302, a database server 304, an electronic device 306, and/or the control component 120 of the additive manufacturing system 100 of FIG. 1.

Still referring to FIG. 3, the user computing device 302 may generally be used as an interface between a user and the other components connected to the control network 300. Thus, the user computing device 302 may be used to perform one or more user-facing functions, such as receiving one or more inputs from a user or providing information to the user. Accordingly, the user computing device 302 may include at least a display and/or input hardware. In the event that any of the other devices connected to the control network 300 (e.g., the database server 304, the electronic device 306, and/or the control component 120), requires oversight, updating, and/or correction, the user computing device 302 may be configured to provide the desired oversight, updating, and/or correction. The user computing device 302 may also be used to input data that is usable to determine a type of material being used for additive manufacture, a number of emitters or energy beams to utilize, a desired irradiation or melt strategy, and/or the like. That is, a user may input information via the user computing device 302 to control various parameters of the additive manufacturing process. The user computing device 302 may, also, operate to present one or more alerts, such as audial or visual alerts, to a user regarding the health or performance of the emitter 130.

The database server 304 may generally be a repository of data that is used for the purposes of calibrating the emitters and/or employing a particular melt strategy as described herein. That is, the database server 304 may contain one or more storage devices for storing data pertaining to information received from the sensing device 150, any generated calculations, and/or the like. In some embodiments, the database server 304 may contain information therein that mirrors the information stored in the data storage component 206 (FIG. 2A) or may be used as an alternative to the data storage component 206 (FIG. 2A), such as an offsite data repository. The database server 304 may be accessible by one or more other devices and/or systems coupled to the control network 300 and may provide the data as needed.

The electronic device 306 may generally be any device that contains hardware that is operable to be used as an interface between a user and the other components of the control network 300. Thus, the electronic device 306 may be used to perform one or more user-facing functions, such as, for example, receiving data one or more external components, displaying information to a user, receiving one or more user inputs, transmitting signals corresponding to the one or more user inputs, and/or the like. While FIG. 3 depicts the electronic device 306 as a smart phone, it should be understood that this is a non-limiting example. That is, the electronic device 306 may be any mobile phone, a tablet computing device, a personal computing device (e.g., a personal computer), and/or the like.

It should be understood that while the user computing device 302 is depicted as a personal computer, the database server 304 is depicted as a server, and the electronic device 306 is depicted as a mobile device, these are non-limiting examples. In some embodiments, any type of computing device (e.g., mobile computing device, personal computer, server, cloud-based network of devices, etc.) or specialized electronic device may be used for any of these components. Additionally, while each of these computing devices is illustrated in FIG. 3 as a single piece of hardware, this is also merely an example. Each of the user computing device 302, the database server 304, and the electronic device 306 may represent a plurality of computers, servers, databases, components, and/or the like.

While FIG. 3 depicts the various systems and/or components communicatively coupled to one another via the control network 300, this is merely illustrative. In some embodiments, various components may be communicatively coupled to one another via a direct connection. In some embodiments, various components may be integrated into a single device.

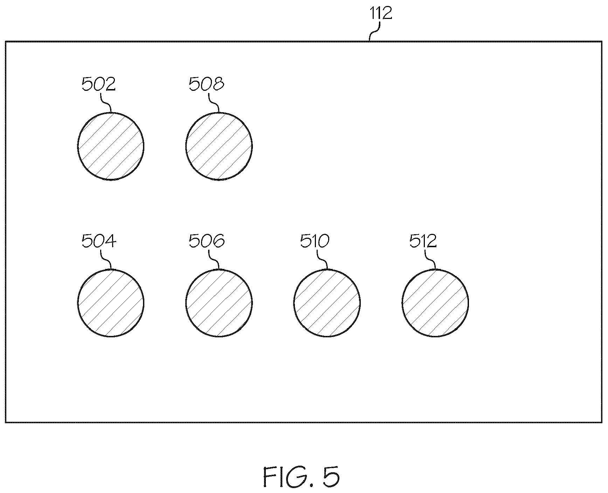

The various embodiments depicted in FIGS. 1, 2A-2B, and 3 should now generally be understood. The operation of the additive manufacturing system 100 will now be discussed with reference to FIG. 1, the illustrative method 400 depicted in FIG. 4, and the illustrative powder layer 112 depicted in FIG. 5. In operation, during a work cycle, the movable build platform 111 may be lowered successively in relation to the emitter 130 (e.g., in the -y direction of the coordinate axes depicted in FIG. 1) after each added powder layer is placed. This means that the build platform 111 starts in an initial position, in which a first powder layer of a particular thickness is laid down on the build platform 111. In some embodiments, the first powder layer may be thicker than the other applied layers, so as to avoid a melt-through of the first layer onto the build platform 111. The build platform 111 is thereafter lowered in connection with laying down a second powder layer for the formation of a new cross section of the article 142.

In an example embodiment, the article 142 may be formed through successive fusion of layers of the raw material 141 supplied from the raw material hoppers 140a, 140b on the build platform 111 (e.g., successive fusion of layers of powder layers). Each layer corresponds to successive cross sections of the article 142. Such a fusion may be particularly completed based on instructions generated from a model of the article 142. In some embodiments, the model may be generated via a CAD (Computer Aided Design) tool.

In embodiments, the emitter 130 generates an electron beam that, when contacting the raw material 141 located on the build platform in the form of the powder layer 112, preheats the powder layer 112, sinters regions of the powder layer 112, or melts a subset of the sintered regions of the powder layer 112, depending on the shape, power, and speed of the energy beam, for instance. In some embodiments, the control component 120 may be used for controlling and managing the electron beam 131 emitted from the emitter 130. At least one focusing coil (not shown), at least one deflection coil, and an electron beam power supply may be electrically connected or communicatively coupled to the control component 120, as indicated by the dashed lines between the control component 120 and the emitter 130 in FIG. 1. In an illustrative embodiment, the emitter 130 generates a focusable electron beam 131 with an accelerating voltage equal to or greater than 20 kilovolts (kV) and equal to or less than 150 kV and with a beam power in the range of about 0 kilowatts (kW) to about 6 kW. In other embodiments, the accelerating voltage is equal to or greater than 50 kV and equal to or less than 70 kV. A pressure in the interior 104 of the build chamber 102 may be in the range of about 10⁻³ millibars (mBar) to about 10⁻⁶ mBar when constructing the article 142 by fusing each successive powder layer 112 with the electron beam 131.

In embodiments, a particular amount of raw material 141 may be provided on the build platform 111. The particular amount of raw material 141 is provided on the build platform 111 from one or more of the raw material hoppers 140a, 140b, in which the raw material 141 is ejected through the respective outlets on the raw material hoppers 140a, 140b, thereby creating a scree of raw material 141 on the build platform 111 (as well as the unfused raw material 141 on either side of the build platform 111).

At step 402 of method 400, the powder layer 112 is applied to the build platform 111 or powder bed 110. It should be understood that the use and arrangement of the raw material hoppers 140a, 140b to supply the raw material 141 used for forming the powder layer 112 described herein is merely illustrative. That is, other arrangements of supplying and providing raw material 141, such as a powder container with a moving floor located outside the build chamber 102 or the like is also contemplated and included within the scope of the present disclosure.

In embodiments, a layer from the raw material 141 may be provided on build platform 111. The layer from the raw material 141 may then be collected by the powder distributor 108 by moving the powder distributor 108 a particular distance in a first direction (e.g., in a direction along the plane formed by the x-axis and the z-axis of the coordinate axes depicted in FIG. 1) into the scree of the raw material 141, thereby allowing a particular amount of the raw material 141 to fall over a top of the powder distributor 108. The powder distributor 108 is then moved in a second direction (e.g., in another direction along the plane formed by the x-axis and the z-axis of the coordinate axes depicted in FIG. 1). In some embodiments, the second direction may be opposite to the first direction. Movement of the powder distributor 108 in the second direction may remove the particular amount of the raw material 141, which has fallen over the top of the powder distributor 108, from the scree of the raw material 141.

The particular amount of the raw material 141 removed from the scree of the raw material 141 (or provided by any other suitable mechanism) in front of the powder distributor 108 (e.g., adjacent to a leading end of the powder distributor 108) may be moved over the powder bed 110 and/or the build platform 111 by means of the powder distributor 108 (including the rake teeth thereof), thereby distributing the particular amount of the raw material 141 over the build platform 111 and forming a powder layer 112.

In embodiments, a distance between a lower part of the rake teeth and the upper part of the build platform 111 or a previous powder layer determines the thickness of the portion of the raw material 141 distributed over the build platform 111 or the previous powder layer. That is, a thickness of the powder layer 112 can be adjusted by adjusting the height of the build platform 111.

At step 404 of method 400, after the powder layer 112 is distributed over the build platform 111 or a previous powder layer of the powder bed 110, the control component 120 may control the emitter 130 to direct the electron beam 131 to a first measurement point 502 with a first focus offset. The focus offset is generally added to the focus current of the electron beam 131, which is constant, to provide a final focus current. The focus offset is adjustable for controlling a focus of the electron beam 131 when a drift in the focus of the electron beam 131 is detected. The first focus offset may be, for instance, +30 mA. The electron beam 131 may be directed to the first measurement point 502 for a set amount of time, such as greater than or equal to 10 µs (microseconds) and less than or equal to 20 ms (milliseconds). In embodiments, the electron beam 131 may be directed to the first measurement point 502 for a set amount of time, such as greater than or equal to 30 µs and less than or equal to 70 µs. In embodiments, the first measurement point 502 may be particularly selected as a point of the powder layer 112 that will not be fused to form a cross section of the article 142. In embodiments, the first measurement point 502 may be particularly selected as a point of the powder layer 112 that is not above a fused portion of the article 142 in the powder bed 110 or below a to-be-fused portion of a future powder layer above the powder layer 112. In other embodiments, the first measurement point 502 may be any point within the powder layer 112, including a point of the powder layer 112 that will be fused to form a cross section of the article 142, a point of the powder layer 112 above a fused portion of the article 142 in the powder bed 110, and/or a point below a to-be-fused portion of a future powder layer above the powder layer 112. In embodiments, the electron beam 131 may be directed to the first measurement point 502 for a particular duration and with a particular power such that the electron beam 131 melts the powder layer 112 at the first measurement point 502.

At step 406 of the method 400, the sensing device 150 measures the x-ray emissions emitted from the first measurement point 502 as the electron beam 131 is directed to the first measurement point 502 with the first focus offset. The sensing device 150 measures the x-ray emissions emitted from the first measurement point 502 for the entire duration the electron beam 131 is directed to the first measurement point 502. It should be appreciated that additional steps may occur between the powder distribution and measurement of x-ray emissions. For example, any suitable process such as, for example, heating, sintering, melting, and the like, may occur prior to the measurement. Additionally, it should be appreciated that, without deviating from the present disclosure, x-ray emission data may be collected during a complete measurement sequence covering all measurement points with resting time.

At step 408 of the method 400 the control component 120 may control the emitter 130 to direct the electron beam 131 to a rest point 504. The electron beam 131 may be directed to the rest point with a focus offset have a larger magnitude than any of the focus offsets of the electron beam 131 when directed to the first measurement point 502. In embodiments, the rest point 504 may be particularly selected as a point of the powder layer 112 that will not be fused to form a cross section of the article 142. In embodiments, the rest point 504 may be particularly selected as a point of the powder layer 112 that is not above a fused portion of the article 142 in the powder bed 110 or below a to-be-fused portion of a future powder layer above the powder layer 112. In other embodiments, the rest point 504 may be any point within the powder layer 112, including a point of the powder layer 112 that will be fused to form a cross section of the article 142, a point of the powder layer 112 above a fused portion of the article 142 in the powder bed 110, and/or a point below a to-be-fused portion of a future powder layer above the powder layer 112. In embodiments, the electron beam 131 may be directed to the rest point 504 for a particular duration and with a particular power such that the electron beam 131 does not melt the powder layer 112 at the rest point 504. In embodiments, the electron beam 131 may be directed to the rest point 504 for a particular duration to allow the first measurement point 502 to cool to a desired temperature.

At step 410 of the method 400 the control component 120 may control the emitter 130 to direct the electron beam 131 to the first measurement point 502 with a second focus offset. The second focus offset may be, for instance, +29 mA. The electron beam 131 may be directed to the first measurement point 502 with the second offset for a set amount of time, such as greater than or equal to 10 µs and less than or equal to 20 ms. In embodiments, the electron beam 131 may be directed to the first measurement point 502 for a set amount of time, such as greater than or equal to 30 µs and less than or equal to 70 µs. In embodiments, the electron beam 131 may be directed to the first measurement point 502 with the second focus offset for a particular duration and with a particular power such that the electron beam 131 melts the powder layer 112 at the first measurement point 502.

At step 412 of the method 400, the sensing device 150 measures the x-ray emissions emitted from the first measurement point 502 as the electron beam 131 is directed to the first measurement point 502 with the second focus offset. The sensing device 150 measures the x-ray emissions emitted from the first measurement point 502 for the entire duration the electron beam 131 is directed to the first measurement point 502 with the second focus offset.

At step 414 of the method 400, the control component 120 may control the emitter 130 to direct the electron beam 131 to a rest point, which may be the rest point 504 or a different rest point 506. In embodiments, the rest point 506, similar to the rest point 504, may be particularly selected as a point of the powder layer 112 that will not be fused to form a cross section of the article 142. In embodiments, the rest point 506 may be particularly selected as a point of the powder layer 112 that is not above a fused portion of the article 142 in the powder bed 110 or below a to-be-fused portion of a future powder layer above the powder layer 112. In other embodiments, the rest point 506 may be any point within the powder layer 112, including a point of the powder layer 112 that will be fused to form a cross section of the article 142, a point of the powder layer 112 above a fused portion of the article 142 in the powder bed 110, and/or a point below a to-be-fused portion of a future powder layer above the powder layer 112. In embodiments, the electron beam 131 may be directed to the rest point 504 or the rest point 506 for a particular duration and with a particular power such that the electron beam 131 does not melt the powder layer 112 at the rest point 504 or the rest point 506. However, it may be appreciated that the powder layer 112 may be permitted to melt so long as the melted powder layer 112 does not interfere with the melted parts. In embodiments, the electron beam 131 may be directed to the rest point 504 or the rest point 506 for a particular duration to allow the first measurement point 502 to cool to a desired temperature.

The described steps 404-414 of the method 400 may be repeated any number of iterations. That is, as indicated in the step 416 of the method 400, the control component 120 may control the emitter 130 to direct the electron beam 131 to the first measurement point 502 a plurality of times. Each time, the electron beam 131 may be directed to the first measurement point 502 with a unique focus offset. The value of the focus offset may increase or decrease by a set increment each time the electron beam 131 is directed to the first measurement point 502. For instance, the electron beam 131 may be directed to the first measurement point 502 1, 2, 3, ... *m*, *m* + 1 times, where the focus offset of the electron beam 131 is set as +30 mA, +29 mA, +28 mA, ... *n*, *n* - 1 mA, respectively, for each of the *m* times the electron beam 131 is directed to the first measurement point 502. In embodiments, *m* may equal sixty, such that the electron beam 131 is directed to the first measurement point 502 sixty-one discrete times. The value of the focus offset may be adjusted by 1 mA each time the electron beam 131 is directed to the first measurement point 502. For instance, the electron beam 131 may have a focus offset of +30 mA for a first duration the electron beam 131 is directed to the first measurement point 502, +29 mA for a second duration the electron beam 131 is directed to the first measurement point 502, and -30 mA for a sixty-first duration the electron beam 131 is directed to the first measurement point 502. It should be appreciated that in embodiments, the electron beam 131 may be directed to the first measurement point 502 any number of discrete times. It should be appreciated that in embodiments, the electron beam 131 may be directed to the first measurement point 502 within any range of focus offsets, for instance +30 mA to -30 mA, +60 mA to -60 mA, + 15 mA to -15 mA, etc. Moreover, it should be appreciated that in embodiments, the focus offset may be adjusted by any increment, constant or non-constant, each time the electron beam 131 is directed to the first measurement point 502. It should further be appreciated that the electron beam 131 may be directed to the first measurement point 502 for any desirable duration of time, constant or non-constant, each time the electron beam 131 is directed to the first measurement point 502.

As indicated in step 418 of the method 400, the sensing device 150 measures the x-ray emissions emitted from the first measurement point 502 for each discrete time the electron beam 131 is directed to the first measurement point 502 with a unique focus offset. The sensing device 150 measures the x-ray emissions emitted from the first measurement point 502 for the entire duration of each discrete time period the electron beam 131 is directed to the first measurement point 502 with a unique focus offset.

Referring now to step 420 of the method 400, after the electron beam 131 is directed to the first measurement point 502 a desired number of iterations with desired unique focus offsets, the control component 120 may control the emitter 130 to direct the electron beam 131 to a second measurement point 508 with a first focus offset. The first focus offset with which the electron beam 131 is applied to the second measurement point 508 may be the same as the first focus offset with which the electron beam 131 was applied to the first measurement point 502. In embodiments, the first focus offset with which the electron beam 131 is applied to the second measurement point 508 may be different from the first focus offset with which the electron beam 131 was applied to the first measurement point 502. The first focus offset at the second measurement point 508 may be, for instance, +30 mA. The electron beam 131 may be directed to the second measurement point 508 for a set amount of time, such as greater than or equal to 10 µs and less than or equal to 20 ms. In embodiments, the electron beam 131 may be directed to the first measurement point 502 for a set amount of time, such as greater than or equal to 30 µs and less than or equal to 70 µs. In embodiments, the second measurement point 508 may be particularly selected as a point of the powder layer 112 that will not be fused to form a cross section of the article 142. In embodiments, the second measurement point 508 may be particularly selected as a point of the powder layer 112 that is not above a fused portion of the article 142 in the powder bed 110 or below a to-be-fused portion of a future powder layer above the powder layer 112. In other embodiments, the second measurement point 508 may be any point within the powder layer 112, including a point of the powder layer 112 that will be fused to form a cross section of the article 142, a point of the powder layer 112 above a fused portion of the article 142 in the powder bed 110, and/or a point below a to-be-fused portion of a future powder layer above the powder layer 112. In embodiments, the electron beam 131 may be directed to the second measurement point 508 for a particular duration and with a particular power such that the electron beam 131 melts the powder layer 112 at the second measurement point 508.

The same procedure with respect to the steps 406-416 of the method 400, relating to the first measurement point 502, may be carried out with respect to the second measurement point 508, as well. For instance, as described with respect to step 406, the sensing device 150 measures the x-ray emissions emitted from the second measurement point 508 as the electron beam 131 is directed to the second measurement point 508 with the first focus offset. The sensing device 150 measures the x-ray emissions emitted from the second measurement point 508 for the entire duration the electron beam 131 is directed to the second measurement point 508.

As described with respect to step 408, relating to the first measurement point 502, after the electron beam 131 is directed to the second measurement point 508 for a desired duration, the control component 120 may control the emitter 130 to direct the electron beam 131 to a rest point. The rest point may be the rest point 504, the rest point 506, or a different rest point 510. In embodiments, the rest point 510 may be particularly selected as a point of the powder layer 112 that will not be fused to form a cross section of the article 142. In embodiments, the rest point 510 may be particularly selected as a point of the powder layer 112 that is not above a fused portion of the article 142 in the powder bed 110 or below a to-be-fused portion of a future powder layer above the powder layer 112. In other embodiments, the rest point 510 may be any point within the powder layer 112, including a point of the powder layer 112 that will be fused to form a cross section of the article 142, a point of the powder layer 112 above a fused portion of the article 142 in the powder bed 110, and/or a point below a to-be-fused portion of a future powder layer above the powder layer 112. In embodiments, the electron beam 131 may be directed to the rest point 504, 506, or 510 for a particular duration and with a particular power such that the electron beam 131 does not melt the powder layer 112 at the rest point 504, 506, or 510. In embodiments, the electron beam 131 may be directed to the rest point 504, 506, or 510 for a particular duration to allow the second measurement point 508 to cool to a desired temperature.

As described with respect to the step 410, relating to the first measurement point 502, following directing the electron beam 131 to the rest point 504, 506, or 510, the control component 120 may control the emitter 130 to direct the electron beam 131 to the second measurement point 508 with a second focus offset. The second focus offset with which the electron beam 131 is applied to the second measurement point 508 may be the same as the second focus offset with which the electron beam 131 was applied to the first measurement point 502. In embodiments, the second focus offset with which the electron beam 131 is applied to the second measurement point 508 may be different from the second focus offset with which the electron beam 131 was applied to the first measurement point 502. The second focus offset may be, for instance, +29 mA. The electron beam 131 may be directed to the second measurement point 508 with the second focus offset for a set amount of time, such as greater than or equal to 10 µs and less than or equal to 20 ms. In embodiments, the electron beam 131 may be directed to the first measurement point 502 for a set amount of time, such as greater than or equal to 30 µs and less than or equal to 70 µs.. In embodiments, the electron beam 131 may be directed to the second measurement point 508 with the second focus offset for a particular duration and with a particular power such that the electron beam 131 melts the powder layer 112 at the second measurement point 508.

As described with respect to the step 412, relating to the first measurement point 502, the sensing device 150 measures the x-ray emissions emitted from the second measurement point 508 as the electron beam 131 is directed to the second measurement point 508 with the second focus offset. The sensing device 150 measures the x-ray emissions emitted from the second measurement point 508 for the entire duration the electron beam 131 is directed to the second measurement point 508 with the second focus offset.

As described with respect to the step 414, relating to the first measurement point 502, the control component 120 may control the emitter 130 to direct the electron beam 131 to a rest point, which may be the rest point 504, the rest point 506, the rest point 510, or a different rest point 512. In embodiments, the rest point 512, may be particularly selected as a point of the powder layer 112 that will not be fused to form a cross section of the article 142. In embodiments, the rest point 512 may be particularly selected as a point of the powder layer 112 that is not above a fused portion of the article 142 in the powder bed 110 or below a to-be-fused portion of a future powder layer above the powder layer 112. In other embodiments, the rest point 512 may be any point within the powder layer 112, including a point of the powder layer 112 that will be fused to form a cross section of the article 142, a point of the powder layer 112 above a fused portion of the article 142 in the powder bed 110, and/or a point below a to-be-fused portion of a future powder layer above the powder layer 112. In embodiments, the electron beam 131 may be directed to the rest point 504, 506, 510, or 512 for a particular duration and with a particular power such that the electron beam 131 does not melt the powder layer 112 at the rest point 504, 506, 510, or 512. In embodiments, the electron beam 131 may be directed to the rest point 504, 506, 510, or 512 for a particular duration to allow the second measurement point 508 to cool to a desired temperature.

As described with respect to the step 416, the steps 404-414 of the method 400, relating to the first measurement point 502, may be similarly repeated any number of iterations with respect to the second measurement point 508. That is, the control component 120 may control the emitter 130 to direct the electron beam 131 to the second measurement point 508 a plurality of times. Each time, the electron beam 131 may be directed to the second measurement point 508 with a unique focus offset. The value of the focus offset may increase or decrease by a set increment each time the electron beam 131 is directed to the second measurement point 508. For instance, the electron beam 131 may be directed to the second measurement point 508 1, 2, 3, ... *m, m* + 1 times, where the focus offset of the electron beam 131 is set as +30 mA, +29 mA, +28 mA, ... *n, n* - 1 mA, respectively, for each of the *m* times the electron beam 131 is directed to the second measurement point 508. In embodiments, *m* may equal sixty, such that the electron beam 131 is directed to the second measurement point 508 sixty-one discrete times. The value of the focus offset may be adjusted by 1 mA each time the electron beam 131 is directed to the second measurement point 508. For instance, the electron beam 131 may have a focus offset of +30 mA for a first duration the electron beam 131 is directed to the second measurement point 508, +29 mA for a second duration the electron beam 131 is directed to the second measurement point 508, and -30 mA for a sixty-first duration the electron beam 131 is directed to the second measurement point 508. It should be appreciated that in embodiments, the electron beam 131 may be directed to the second measurement point 508 any number of discrete times. It should be appreciated that in embodiments, the electron beam 131 may be directed to the second measurement point 508 with any range of focus offsets, for instance +30 mA to -30 mA, +60 mA to -60 mA, + 15 mA to -15 mA, etc. Moreover, it should be appreciated that in embodiments, the focus offset may be adjusted by any increment, constant or non-constant, each time the electron beam 131 is directed to the second measurement point 508. It should further be appreciated that the electron beam 131 may be directed to the second measurement point 508 for any desirable duration of time, constant or non-constant, each time the electron beam 131 is directed to the second measurement point 502.

Referring now to step 422 of the method 400, as described with respect to the step 418 relating to the first measurement point 502, the sensing device 150 measures the x-ray emissions emitted from the second measurement point 508 for each discrete time the electron beam 131 is directed to the second measurement point 508 with a unique focus offset. The sensing device 150 measures the x-ray emissions emitted from the second measurement point 508 for the entire duration of each discrete time period the electron beam 131 is directed to the second measurement point 508 with a unique focus offset.

While the method 400 has been discussed with respect to directing the electron beam 131 to two measurement points 502, 508 of the powder layer 112, it should be appreciated that the same steps as previously discussed with respect to the steps 402-422 may be completed with respect to any number of desirable measurement points located along the powder layer 112. For instance, the steps 402-422 may be completed with respect to a plurality of discrete measurement points that span any desirable area of the powder layer 112.

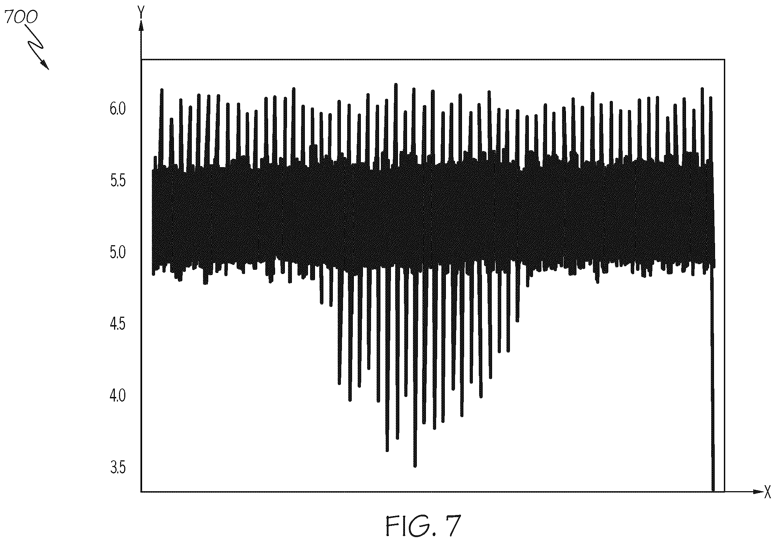

The analysis of the data collected throughout the method 400 of FIG. 4 will now be discussed with reference to FIG. 1, FIG. 5, and the illustrative method depicted in FIG. 6. Referring to step 602 of the method 600, the control component 120 generates a plot of raw x-ray emissions from the first measurement point 502. For instance, at the step 602, the control component 120 generates a plot of all the x-ray emissions data collected with the sensing device 150 through the steps 404-416 of the method 400 (FIG. 4). That is, the controller plots the x-ray emissions data collected by the sensing device 150 as the electron beam 131 is directed to the first measurement point 502 with each desired unique focus offset and as the electron beam 131 is directed to a rest point, such as the rest points 504, 506 between each discrete time period the electron beam 131 is directed to the first measurement point 502. An example plot of raw x-ray emissions 700 from the first measurement point 502 is depicted in FIG. 7. The y-axis represents the intensity or amount of x-ray emissions detected by the sensing device 150, and the x-axis represents time. Although described herein as directing the electron beam 131 to a rest point between each measurement point, it should be appreciated that, in embodiments, the electron beam 131 may continue to a subsequent measurement point with the same focus offset or, alternatively, turned off to allow the electron beam 131 to rest prior to moving to a new measurement point with a new focus offset.

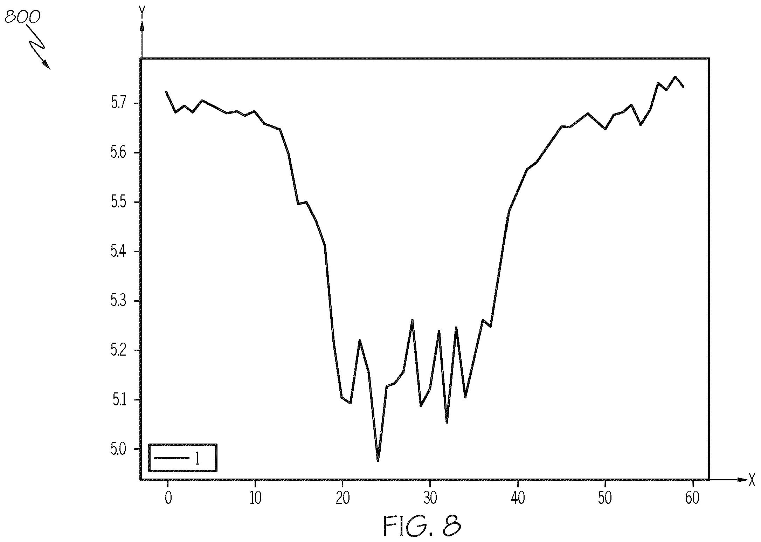

Still referring to FIGS. 1, 5, and 6, at step 604, the control component 120 calculates a mean value, for each unique focus offset of the electron beam 131 applied to the first measurement point 502, of the x-ray emissions emitted from the first measurement point 502. Specifically, each of the electron beams 131 applied to the first measurement point 502 last for a duration of, for example, 60 seconds. The x-ray emission is detected for the entire duration for each electron beam 131. Corresponding time slices from each detected x-ray emission is averaged to determine the mean value. These mean values are then plotted, such as that shown in FIG. 8. Because the amount of time that the electron beam 131 is applied to the first measurement point 502 with each unique focus offset is known, and because the amount of time the electron beam 131 is applied to a rest point between time periods where the electron beam 131 is applied to the first measurement point 502 is also known, the x-ray emission data collected for each time period the electron beam 131 is applied to the first measurement point 502 with a unique focus offset may be isolated. For instance, the control component 120 may isolate the x-ray emission data collected during the entire duration of the time period the electron beam 131 is applied to the first measurement point 502 with the first focus offset. The control component may then calculate an average of the x-ray emission data collected during the entire duration of the time period the electron beam 131 is applied to the first measurement point 502 with the first focus offset. The control component 120 performs similar analyses for each unique focus offset the electron beam 131 is applied to the first measurement point 502 with.

Still referring to FIGS. 1, 5, and 6, at step 606, the control component 120 may generate a plot of mean x-ray emissions emitted from the first measurement point 502. That is, the control component 120 may plot each of the focus offsets calculated at the step 604. An example plot of mean x-ray emissions 800 emitted from the first measurement point 502 is depicted in FIG. 8. The y-axis represents the average intensity or amount of x-ray emissions detected by the sensing device 150, and the x-axis represents the sample number. That is, sample number one may represent the data collected during the time period the electron beam 131 is directed to the first measurement point 502 with the first focus offset, sample number two may represent the data collected during the time period the electron beam 131 is directed to the first measurement point 502 with the second focus offset, sample number three may represent the data collected during the time period the electron beam 131 is directed to the first measurement point 502 with a third unique focus offset, etc.

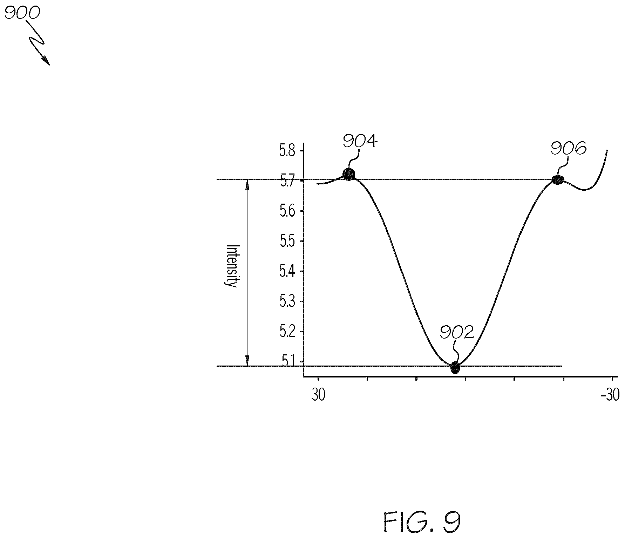

Still referring to FIGS. 1, 5, and 6, at step 608 of the method 600, the control component 120 calculates a best polynomial fit of the plot of mean x-ray emissions 800 (FIG. 8) emitted from the first measurement point 502. The best polynomial fit of the plot of mean x-ray emissions 800 (FIG. 8) effectively creates a smoothed plot of mean x-ray emissions. An example smoothed plot of mean x-ray emissions 900 is depicted in FIG. 9. FIG. 9 depicts a reference plot to which other reference plots may be compared. The y-axis represents the average intensity or amount of x-ray emissions detected by the sensing device 150, and the x-axis represents the unique focus offset associated with each sample number. That is, the electron beam 131 may have been applied to the first measurement point 502 with a focus offset of -30 mA during the first sample, the electron beam 131 may have been applied to the first measurement point 502 with a focus offset of -29 mA during the second sample, etc.

Referring to FIGS. 1, 5, 6, and 9, at step 610 of the method 600, the control component 120 determines a focus offset of the electron beam 131 directed to the first measurement point 502 that correlates to a maximum intensity of the electron beam 131 at the first measurement point 502. For instance, the control component 120 may determine the focus offset of the electron beam 131 directed to the first measurement point 502 that correlates to a maximum intensity of the electron beam 131 as the focus offset of the electron beam 131 associated with a minimum average intensity or amount of x-ray emissions along the y-axis. For instance, the focus offset of the electron beam 131 directed to the first measurement point 502 that correlates to a maximum intensity of the electron beam 131 at the first measurement point 502 may be the point 902, representing a focus offset of +3 mA, of the smoothed plot of mean x-ray emissions 900. The intensity of the electron beam 131 at a particular focus offset may be measured as the difference between the detected x-ray emissions at the focus offset of interest, for instance the point 902, and the detected x-ray emissions at the nearest local maximums, for instance points 904 and 906 of the smoothed plot of mean x-ray emissions 900.

The same procedure discussed with reference to the steps 602-610, relating to the first measurement point 502, may be completed with respect to every measurement point of the powder layer 112 for which data was collected during the method 400 (FIG. 4). For instance, at step 612-614 of the method 600, the control component may complete the procedure discussed with respect to the first measurement point 502 in the steps 602-610 of the method 600, for the second measurement point 508 and the x-ray emissions collected from the second measurement point 508. It should be appreciated, that in embodiments, the data collected during the method 400 (FIG. 4) may be analyzed in any order. For instance, the data collected from the second measurement point 508 may be analyzed prior to the data collected from the first measurement point 502.

Referring now to step 616 of the method 600, the control component 120 may determine if there is a drift in the focus of the electron beam 131. The control component 120 may determine if there is a drift in the focus of the electron beam 131 at each individual measurement point of the powder layer 112 for which data was collected during the method 400 (FIG. 4). The control component 120 may determine if there is a drift in the focus of the electron beam 131 at each individual measurement point of the powder layer 112 for which data was collected during the method 400 (FIG. 4) in any desirable order. For instance, the control component 120 may determine if there is a drift in the focus of the electron beam 131 at the first measurement point 502 immediately after the step 610 of the method 600, or after the data from each individual measurement point of the powder layer 112 has been analyzed. With particular reference to the first measurement point 502, the control component 120 may compare the focus offset of the electron beam 131 that correlates to the maximum intensity of the electron beam 131 at the first measurement point 502 with initial reference data of the electron beam 131. That is, the initial reference data of the electron beam 131 may indicate that the focus offset of the electron beam 131, for a maximum intensity of the electron beam 131 at the coordinates of the powder layer 112 corresponding to the first measurement point 502, is 0 mA. If at the step 610, the control component 120 determines that the maximum intensity of the electron beam 131 at the first measurement point 502 is with a focus offset of 0 mA, then the control component 120 determines there is no drift in the focus of the electron beam 131. The intensity may be determined by an x-ray detector. However, if the control component 120 determines that the maximum intensity of the electron beam 131 at the first measurement point 502 is with a focus offset of +3 mA, then the control component 120 determines there is a drift in the focus of the electron beam 131 of 3 mA.

If there is a drift in the focus of the electron beam 131, the initial calibration settings of the electron beam 131 are no longer generating an optimal electron beam intensity at the powder layer 112. More particularly, if there is a drift in the focus of the electron beam 131 at the first measurement point 502, the initial calibration settings of the electron beam 131 are no longer generating an optimal electron beam intensity and spot quality at the coordinates of the first measurement point 502 of the powder layer 112. Drift in focus of the electron beam 131 may vary based on the particular location of the powder layer 112 the electron beam 131 is directed to. At step 618 of the method 600, the control component 120 may generate an alert if there is a drift in the focus of the electron beam 131. The alert may be any audio, visual, or tactile alert presented on the electronic device 306, for instance. The alert may inform a user of the drift in the focus of the electron beam 131, allowing a user to manually re-calibrate or adjust one or more components of the emitter 130. In addition to or instead of generating an alert, at step 620 of the method 600, the control component 120 may automatically adjust the electron beam 131, or more particularly one or more components of the emitter 130, to correct for a drift in the focus of the electron beam 131. It should be appreciated that the steps 618 and 620 of the method 600 may be carried out individually with respect to each measurement point of the powder layer 112 analyzed, or collectively, such that a single alert may indicate a drift in the focus of the electron beam 131 at multiple measurement points along the powder layer 112. Although it may be described herein that the analysis of x-ray emission data may be performed at the control component 120, it should be appreciated that the analysis may alternatively be performed at some remote location by a separate device such as, for example, the user computing device 302, the database server 304, or the electronic device 306, and subsequently communicated to the control component 120.

It should now be understood that that the devices, systems, and methods described herein provide methods for monitoring the spot quality and performance of an electron beam during a build cycle. If a drift in the focus of the electron beam, compared to the initial calibration settings of the electron beam, is identified at particular coordinates of the powder layer the electron beam is directed to, an alert may be generated to allow a user to manually adjust one or more components of the electron beam emitter and/or a control component may automatically adjust one or more components of the emitter to correct for the drift in beam focus. Therefore, malfunctions in beam performance may be quickly identified and corrected during a build cycle.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Further aspects of the embodiments of the invention are provided by the subject matter of the following clauses:
1. A method of monitoring a spot quality of an electron beam, comprising: directing the electron beam to a first measurement point in a powder layer a plurality of times; adjusting a focus offset of the electron beam each of the plurality of times the electron beam is directed to the first measurement point; measuring x-ray emissions from the first measurement point each of the plurality of times the electron beam is directed to the first measurement point; and determining a drift in a focus or an intensity of the electron beam based on the measured x-ray emissions.
2. The method of the preceding clause, further comprising: directing the electron beam to a rest position in the powder layer between each of the plurality of times the electron beam is directed to the first measurement point.
3. The method of any preceding clause, further comprising: determining a focus offset of the electron beam directed to the first measurement point that correlates to a maximum intensity of the electron beam at the first measurement point.
4. The method of any preceding clause, further comprising: directing the electron beam to a second measurement point in the powder layer a plurality of times; adjusting the focus offset of the electron beam each of the plurality of times the electron beam is directed to the second measurement point; measuring x-ray emissions from the second measurement point each of the plurality of times the electron beam is directed to the second measurement point.
5. The method of any preceding clause, further comprising generating an alert in response to a determined drift in the focus of the electron beam.
6. The method of any preceding clause, further comprising adjusting the electron beam in response to the determined drift in the focus of the electron beam.
7. The method of any preceding clause, further comprising adjusting the focus offset of the electron beam in increments of 1 mA, from -30 mA to +30 mA, each of the plurality of times the electron beam is directed to the first measurement point.
8. The method of any preceding clause, wherein the directing the electron beam to the first measurement point in the powder layer the plurality of times melts the first measurement point in the powder layer.
9. An additive manufacturing system, comprising: a build chamber comprising a powder distributor and a build platform, the build platform supporting a powder layer, the powder distributor movable over the build platform to distribute the powder layer; an energy beam source emitting an electron beam; and an electronic control unit including a processing device configured to: direct the electron beam to a first measurement point in the powder layer a plurality of times; adjust a focus offset of the electron beam each of the plurality of times the electron beam is directed to the first measurement point; measure x-ray emissions from the first measurement point each of the plurality of times the electron beam is directed to the first measurement point; and determine a drift in a focus or an intensity of the electron beam based on the measured x-ray emissions.
10. The additive manufacturing system of the preceding clause, wherein the electronic control unit is further configured to direct the electron beam to a rest position in the powder layer between each of the plurality of times the electron beam is directed to the first measurement point.
11. The additive manufacturing system of any preceding clause, wherein the electronic control unit is further configured to determine a focus offset of the electron beam directed to the first measurement point that correlates to a maximum intensity of the electron beam at the first measurement point.
12. The additive manufacturing system of any preceding clause, wherein the electronic control unit is further configured to: direct the electron beam to a second measurement point in the powder layer a plurality of times; adjust the focus offset of the electron beam each of the plurality of times the electron beam is directed to the second measurement point; and measure x-ray emissions from the second measurement point each of the plurality of times the electron beam is directed to the second measurement point.
13. The additive manufacturing system of any preceding clause, wherein the electronic control unit is further configured to generate an alert in response to a determined drift in the focus of the electron beam.
14. The additive manufacturing system of any preceding clause, wherein the electronic control unit is further configured to adjust the electron beam in response to the determined drift in the focus of the electron beam.
15. An electronic control unit of an additive manufacturing device, the electronic control unit comprising a processor configured to: direct an electron beam to a first measurement point in a powder layer a plurality of times; adjust a focus offset of the electron beam each of the plurality of times the electron beam is directed to the first measurement point; measure x-ray emissions from the first measurement point each of the plurality of times the electron beam is directed to the first measurement point; and determine a drift in a focus or an intensity of the electron beam based on the measured x-ray emissions.
16. The electronic control unit of an additive manufacturing device of the preceding clause, wherein the processor is further configured to direct the electron beam to a rest position in the powder layer between each of the plurality of times the electron beam is directed to the first measurement point.
17. The electronic control unit of an additive manufacturing device of any preceding clause, wherein the processor is further configured to determine a focus offset of the electron beam directed to the first measurement point that correlates to a maximum intensity of the electron beam at the first measurement point.
18. The electronic control unit of an additive manufacturing device of any preceding clause, wherein the processor is further configured to: direct the electron beam to a second measurement point in the powder layer a plurality of times; adjust the focus offset of the electron beam each of the plurality of times the electron beam is directed to the second measurement point; and measure x-ray emissions from the second measurement point each of the plurality of times the electron beam is directed to the first measurement point.
19. The electronic control unit of an additive manufacturing device of any preceding clause, wherein the processor is further configured to generate an alert if it is determined there is a drift in the focus of the electron beam.
20. The electronic control unit of an additive manufacturing device of any preceding clause, wherein the processor is further configured to automatically adjust the electron beam if it is determined there is a drift in the focus of the electron beam.

## Claims

1. A method of monitoring a spot quality of an electron beam (131), comprising:
directing the electron beam (131) to a first measurement point (502) in a powder layer (112) a plurality of times;
adjusting a focus offset of the electron beam (131) each of the plurality of times the electron beam (131) is directed to the first measurement point (502);
measuring x-ray emissions from the first measurement point (502) each of the plurality of times the electron beam (131) is directed to the first measurement point (502); and
determining a drift in a focus or an intensity of the electron beam (131) based on the measured x-ray emissions.

2. The method of claim 1, further comprising:
directing the electron beam (131) to a rest position in the powder layer (112) between each of the plurality of times the electron beam (131) is directed to the first measurement point (502).

3. The method of claim 1 or claim 2, further comprising:
determining a focus offset of the electron beam (131) directed to the first measurement point (502) that correlates to a maximum intensity of the electron beam (131) at the first measurement point (502).

4. The method of any one of claims 1-3, further comprising:
directing the electron beam (131) to a second measurement point (508) in the powder layer (112) a plurality of times;
adjusting the focus offset of the electron beam (131) each of the plurality of times the electron beam (131) is directed to the second measurement point (508); and
measuring x-ray emissions from the second measurement point (508) each of the plurality of times the electron beam (131) is directed to the second measurement point (508).

5. The method of any one of claims 1-4, further comprising generating an alert in response to a determined drift in the focus of the electron beam (131).

6. The method of any one of claims 1-5, further comprising adjusting the electron beam (131) in response to the determined drift in the focus of the electron beam (131).

7. The method of any one of claims 1-6, further comprising adjusting the focus offset of the electron beam (131) in increments of 1 mA, from -30 mA to +30 mA, each of the plurality of times the electron beam (131) is directed to the first measurement point (502).

8. The method of any one of claims 1-7, wherein the directing the electron beam (131) to the first measurement point (502) in the powder layer (112) the plurality of times melts the first measurement point (502) in the powder layer (112).

9. An additive manufacturing system, comprising:
a build chamber (102) comprising a powder distributor (108) and a build platform (111), the build platform (111) supporting a powder layer (112), the powder distributor (108) movable over the build platform (111) to distribute the powder layer (112);
an energy beam source (130) emitting an electron beam (131); and
an electronic control unit (120) including a processing device configured to:
direct the electron beam (131) to a first measurement point (502) in the powder layer (112) a plurality of times;
adjust a focus offset of the electron beam (131) each of the plurality of times the electron beam (131) is directed to the first measurement point (502);
measure x-ray emissions from the first measurement point (502) each of the plurality of times the electron beam (131) is directed to the first measurement point (502); and
determine a drift in a focus or an intensity of the electron beam (131) based on the measured x-ray emissions.

10. The additive manufacturing system of claim 9, where in the electronic control unit (120) is further configured to direct the electron beam (131) to a rest position in the powder layer (112) between each of the plurality of times the electron beam (131) is directed to the first measurement point (502).

11. The additive manufacturing system of claim 9 or claim 10, wherein the electronic control unit (120) is further configured to determine a focus offset of the electron beam (131) directed to the first measurement point (502) that correlates to a maximum intensity of the electron beam (131) at the first measurement point (502).

12. The additive manufacturing system of any one of claims 9-11, wherein the electronic control unit (120) is further configured to:
direct the electron beam (131) to a second measurement point (508) in the powder layer (112) a plurality of times;
adjust the focus offset of the electron beam (131) each of the plurality of times the electron beam (131) is directed to the second measurement point (508); and
measure x-ray emissions from the second measurement point (508) each of the plurality of times the electron beam (131) is directed to the second measurement point (508).

13. The additive manufacturing system of any one of claims 9-12, wherein the electronic control unit (120) is further configured to generate an alert in response to a determined drift in the focus of the electron beam (131).

14. The additive manufacturing system of any one of claims 9-13, wherein the electronic control unit (120) is further configured to adjust the electron beam (131) in response to the determined drift in the focus of the electron beam (131).

15. An electronic control unit (120) of an additive manufacturing device, the electronic control unit (120) comprising a processor configured to:
direct an electron beam (131) to a first measurement point (502) in a powder layer (112) a plurality of times;
adjust a focus offset of the electron beam (131) each of the plurality of times the electron beam (131) is directed to the first measurement point (502);
measure x-ray emissions from the first measurement point (502) each of the plurality of times the electron beam (131) is directed to the first measurement point (502); and
determine a drift in a focus or an intensity of the electron beam (131) based on the measured x-ray emissions.
